# EUROPEAN PATENT APPLICATION

(11) **EP 1 728 951 A1**
(43) Date of publication of application: **06.12.2006**
(21) Application number: 05447127.1
(22) Date of filing: 01.06.2005
(51) Int. Cl.: E05D 1/04, F16M 11/04, F16M 11/12

(54) **Support for multiple displays**

(71) Applicant: Barco NV, 8500 Kortrijk (BE)
(72) Inventor: Dinger, Maarten, 2311 CP Leiden (NL); Van Dullemen, Marlies, 2314 EN Leiden (NL); Van Stenis, Jacco, 2343 KR Oegstgeest (NL); Desmet, Leen, 8530 Harelbeke (BE)
(74) Representative: Bird, William Edward

(57) **Abstract**

A support for supporting multiple display devices enables viewing angles of an adjacent pair of the devices to be altered relative to each other, by rotation of a display about a virtual hinge along an axis between adjacent edges of the pair. A virtual hinge line (30) can avoid the need for an actual hinge between the adjacent edges, and thus help enable the displays to be located closer together. Compared to joints allowing multiple degrees of freedom of movement, the rotation about a virtual hinge can make it easier to adjust the relative viewing angles without affecting other parameters such as the relative vertical or horizontal alignments. The virtual hinge can be achieved by supporting the display devices on a curved slider (130). Supporting arms (40, 50) curve along an arc between the backs of the display devices.

## Description

### Field of the invention

This invention relates to supports for multiple display devices and methods of making the same.

### Description of the Related Art

It is known from US patent 5594620 to try to minimize the physical gap inherent in a dual display system. This involves, in this document, providing a hinged mounting for the second of the screens, clamped to a first screen. The mounting has a single axis hinge along the vertical gap between the screens, so that one screen can be folded back when not in use. However the hinge inevitably takes up a finite amount of space between the screens.

It is known from GB 2333391 to provide a multi-display monitor comprising a base, a frame supported by the base and a pair of substantially flat display panels, in which each of the display panels are collapsibly connected by a hinge to the frame. The hinges are next to each other between the pair of displays. Each of the flat display panels can be rotated forwards to face each other for transport.

It is known from WO patent application 2004/023273 to provide a support for a pair of flat screens next to each other, while permitting adjustment of at least one of the flat displays in one axis or two axes. The support includes an oblong support element at the rear of the at least one panel connected to the rear of the at least one flat panel display at two spaced locations. The oblong support extends parallel to the rear of the at least one flat panel display in at least one position thereof. First axis adjustable couplings are provided at each of the two locations that permit adjustment of the at least one flat panel display in a first axis. For adjustability in two axes, at least one second axis adjustable coupling is provided between the two locations to permit adjustment in a second axis. The adjustment mechanism may be gimbal-like. This enables greater freedom of adjustment, but there remains a need for improved devices.

### Summary of the Invention

An object of the invention is to provide improved support for multiple displays.

According to a first aspect, the invention provides a support for supporting multiple display devices, the support being arranged to enable viewing angles of an adjacent pair of the devices to be altered relative to each other, by enabling a rotation of one or both of the pair about a hinge construction having a virtual hinge line located along an axis between adjacent edges of the pair of devices. The rotation is about the virtual hinge line.

The support for supporting multiple display devices as in the present invention comprises a hinge construction comprising actual or physical hinge elements and an axis of hinging, which forms a virtual hinge line. The axis of hinging is present between adjacent edges of the display devices, but no actual hinge elements are present at that axis of hinging. The hinge construction according to embodiments of the present invention therefore concerns constructions enabling rotation around a virtual hinge line in space. It is because this line is not an actual component of the device that it is called a virtual axis or a virtual hinge line.

The use of rotation about a virtual hinge line can avoid the need for an actual hinge between the adjacent edges, and thus help enable the displays to be located closer together. An actual hinge is likely to be weak if it is made as narrow as possible in order to reduce the gap between two adjacent display devices as much as possible. Also, it is harder to change between portrait and landscape orientations of the display devices if an actual hinge is fixed to the adjacent edges. Compared to prior supports without any hinge, but with joints allowing multiple degrees of freedom of movement, the rotation about a virtual hinge line can make it easier to adjust the relative viewing angles without affecting other parameters such as the relative vertical or horizontal alignments. This ease of adjustment is particularly useful in environments such as hospitals or other workplaces where different users will share the screens.

The actual hinge elements may be arranged behind the display devices. The virtual hinge line of the hinge construction is preferably arranged at the front side of the display devices. This can make it easier to accommodate displays of different sizes, or to add additional display devices to extend the plane of the display devices. According to alternative embodiments, the hinge construction may comprise actual hinge elements above, below or in front of the display devices.

Another such additional feature is the hinge construction having a longitudinal axis and a curved slider coupled to at least one of the display devices and curved about the axis of the hinge construction. The longitudinal axis coincides with the virtual hinge line.

Another such additional feature is the axis of the hinge construction being located at a front edge of the display devices, to enable rotation out of a common plane towards a viewer.

Another such additional feature is the curved slider having first and second arms arranged to slide on bearing surfaces of the arms. This enables undesired relative movement between the display devices caused by slider gap tolerance to be reduced more easily, since there is only one gap and so only one tolerance to handle.

Another such additional feature is the curved slider having a central part and first and second arms arranged to slide on bearing surfaces of the central part. This means there are two tolerances, to cause more relative movement between the screens, but this arrangement may be simpler to manufacture.

Another such additional feature is the central part having a box cross-section. This can help provide more rigidity for a given weight and a given material stiffness.

Another such additional feature is the curved slider extending substantially the full length of an arc from the back of one of the display devices to the back of the other. The use of the full length helps enable relative movement from slider tolerances to be reduced or minimized.

Another such additional feature is the slider having co-operating guide surfaces for guiding the sliding.

Another such additional feature is the guide surfaces comprising co-operating wedge profile surfaces on the bearing surfaces, the wedge profile may have a triangular shape. These can help minimize unwanted relative movement, as pressure on the wedge profiles tends to prevent unwanted lateral movement. Instead of the triangular shapes of the guide surfaces, also bloc form shapes may be used. Also a combination of triangular and bloc form shaped guide surfaces may be used.

Another such additional feature is the hinge construction having a four-bar type linkage. This is an alternative to the slider, but is likely to be more complex to manufacture, and harder to make stiff while easily adjustable. Also, it may be harder to adapt to different sizes of display device. Also a guiding system with small ball bearings may be used.

Another such additional feature is an actual hinge on the axis away from the display devices. This can be another alternative to a slider to implement the virtual hinge, but may make it harder to accommodate displays of different sizes, or to add additional display devices to extend the plane of the display devices. If the actual hinge is provided as an addition to the hinge construction with the virtual hinge line, it can enable the pair to be rotated together.

Another such additional feature is the support having a hinge perpendicular to the axis, to enable adjustment of viewing angle of the pair.

Another such additional feature is a mounting for one or more further display devices. These further devices can be arranged above or below or to the side of the first pair.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

### Brief Description of the Drawings

How the present invention may be put into effect will now be described by way of example with reference to the appended drawings, in which:
Fig 1 shows a perspective view from the rear of a support and a pair of displays, according to an embodiment of the present invention,
Fig 2 shows the view of fig 1, with the displays rotated about the virtual hinge line of the hinge construction,
Fig 3 shows a plan view of an embodiment of a support and a pair of displays according to an embodiment of the present invention,
Fig 4 shows an exploded view of an embodiment of the support of the present invention without the displays,
Fig 5 shows a cross section of an alternative embodiment of the support according to the present invention,
Fig 6 shows an exploded view of another embodiment of the support according to the present invention,
Fig 7 shows a perspective view from the rear of a support, the base of the support not being shown, display devices being attached to the support in landscape orientation,
Fig 8 shows a perspective view from the rear of a support, wherein the arms of the support device do not meet the back of the display devices at their respective centers ― Fig 8 is a view from the rear of the device illustrated in Fig. 3,
Fig 9 shows a perspective view from the rear of a system comprising a support onto which more than two, in the example given three, display devices are attached, and
Fig 10 shows an exploded view of yet another embodiment of a support according to the present invention.

### Description of the Preferred Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

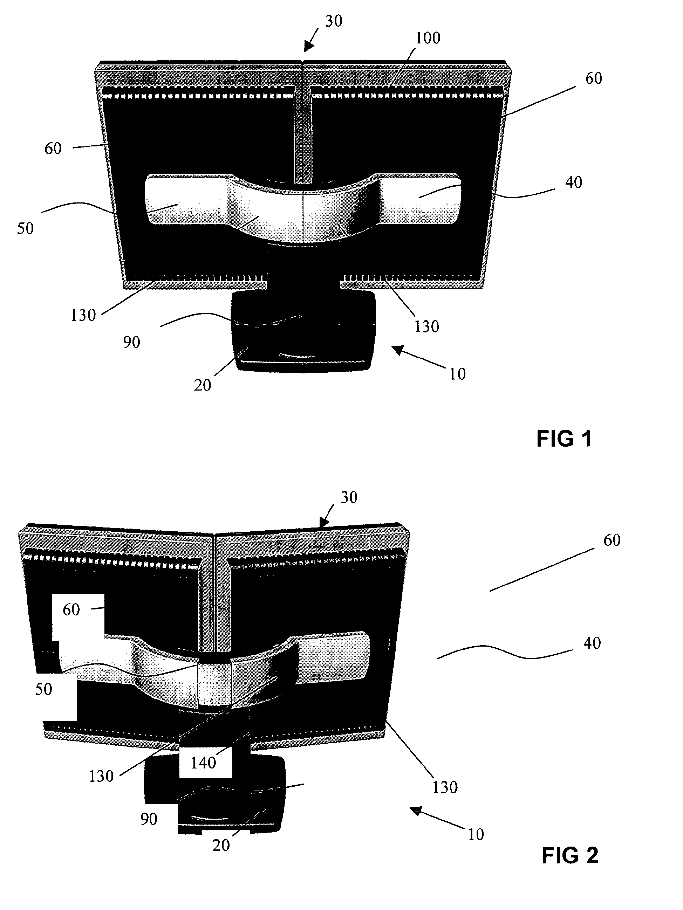

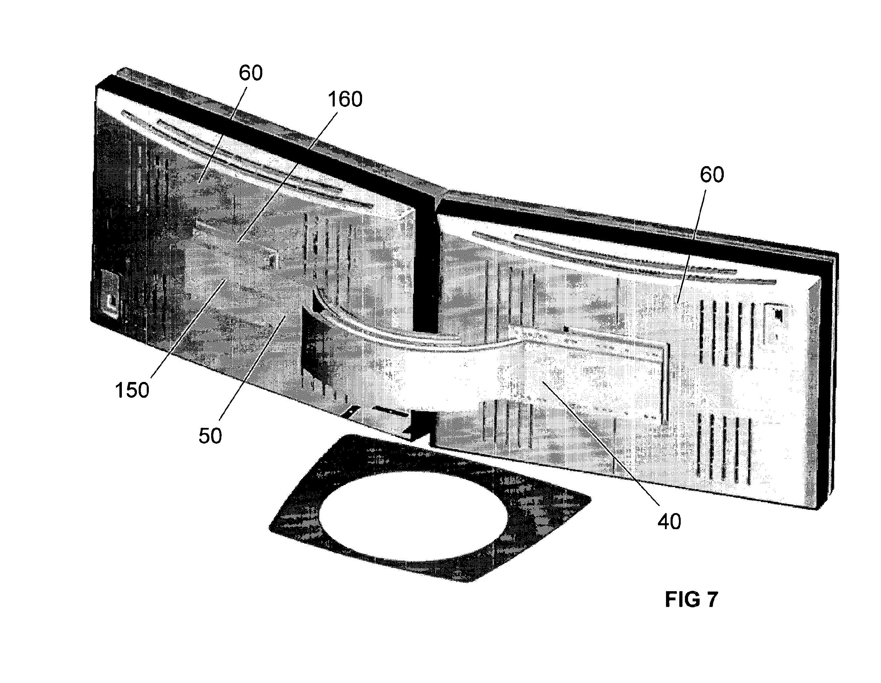

A first embodiment of the invention, illustrated in Fig 1 and Fig 2 has a support 10 having a leg 90 and a base 20 and a hinge construction comprising a right arm 40 and a left arm 50. Each arm 40, 50 is fixed to the back of a display device 60 in the form of a flat panel display. In the embodiment illustrated in Fig 1 and Fig 2, the two displays 60 are mounted in a portrait orientation, though they can be remounted to be in landscape orientation, as illustrated in Fig 7. The arms 40, 50 are mounted on a central part 100 in the form of a centre head attached to a pedestal, formed by the leg 90 and base 20, suitable for a desk, though other arrangements are possible such as wall or ceiling mounts, or in-car, or in-aircraft mounts for example. The arms 40, 50 have a curved slider 130 which fits and slides along a curved slider 140 on the central part 100, so that the display devices 60 can each be rotated around a virtual hinge line 30. This virtual hinge line 30 is located between the adjacent edges of the two displays 60, side edges in the case shown in the drawings, though if the set-up is such that the display devices 60 are positioned one above the other, then the adjacent edges are a top and bottom edge respectively. The arms 40, 50 and their mounting on the central part 100 form the actual hinge elements of the hinge construction.

Fig 2 shows the same set-up as Fig 1, with a support 10 comprising a pedestal with a leg 90 and a base 20, a right arm 40 and a left arm 50 onto which display devices 60 have been attached. The illustration is made after the display devices 60 have each been rotated forwards towards a viewer, out of their common plane. The adjacent edges are still together, as the axis of the virtual hinge line 30 is located at the front of the display devices 60, so there is little or no gap between the display devices 60. In principle, the support 10 could be arranged to allow rotation backwards behind the common plane, if the hinge construction axis is moved back with regard to the front side of the display devices 60 and if the side shape of the panels 60 would allow so.

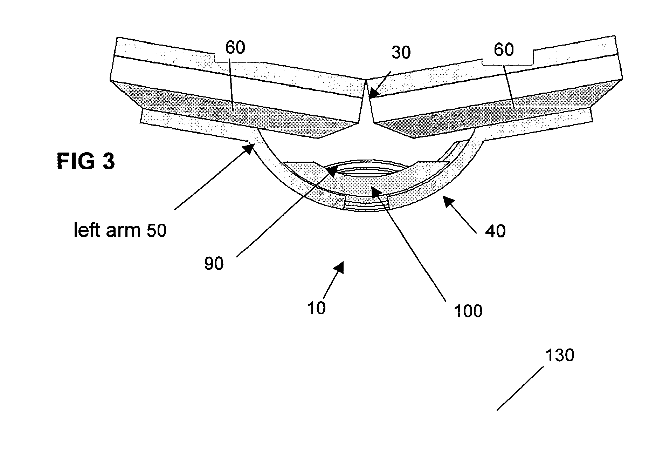

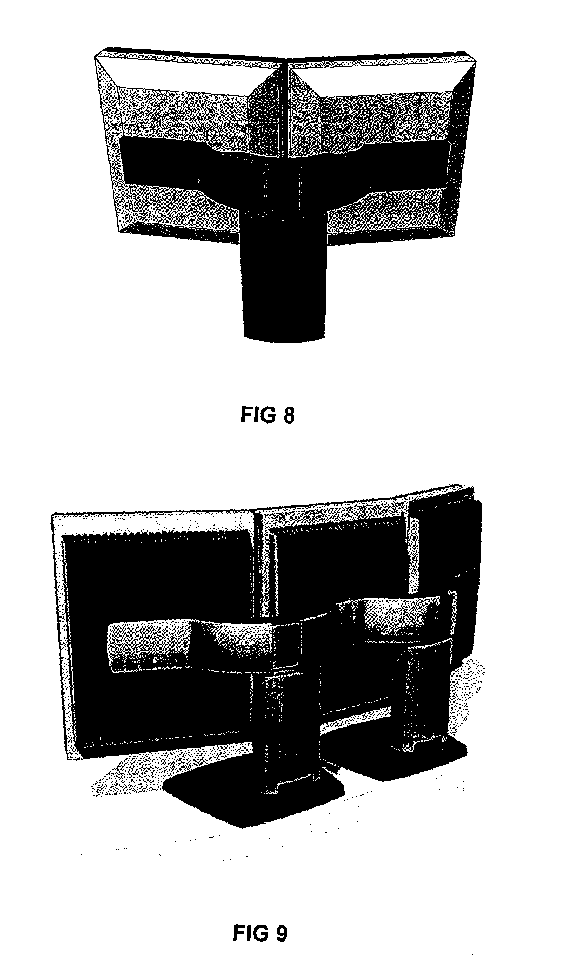

Fig 3 shows a plan view of an embodiment of a support 10 according to the present invention. Similar reference numerals have been used to those of Fig 1 as appropriate. This shows that the central part or centre head 100 extends substantially all the way round an arc from the back of one display device 60 to the back of the other display device 60. The slider can be arranged so that the sliding part 130 of each arm 40, 50 extends along half of the arc, with no overlap between the sliding parts 130 of the arms 40, 50. This can provide simpler construction, but since the slider 140 may take a considerable load, depending on the weight of the display devices 60, the moment acting on the slider 140 on the central part 100, and therefore the pressure on the bearing surfaces can be eased if the slider part 130 of each arm 40, 50 is made longer. This can be achieved by having the sliding parts 130 of the arms 40, 50 effectively overlapping, so that each sliding part 130 extends along substantially all of the arc. The length of the arc depends on the radius from the virtual hinge line 30, and on the thickness of the display devices 60, if the hinge line 30 is at the front of the display devices 60. The radius can be chosen to suit the length of slider desired. The arms 40, 50 may, but do not need not meet the back of the display devices 60 in the centre of the back, as illustrated in Fig 8 compared to Fig 7.

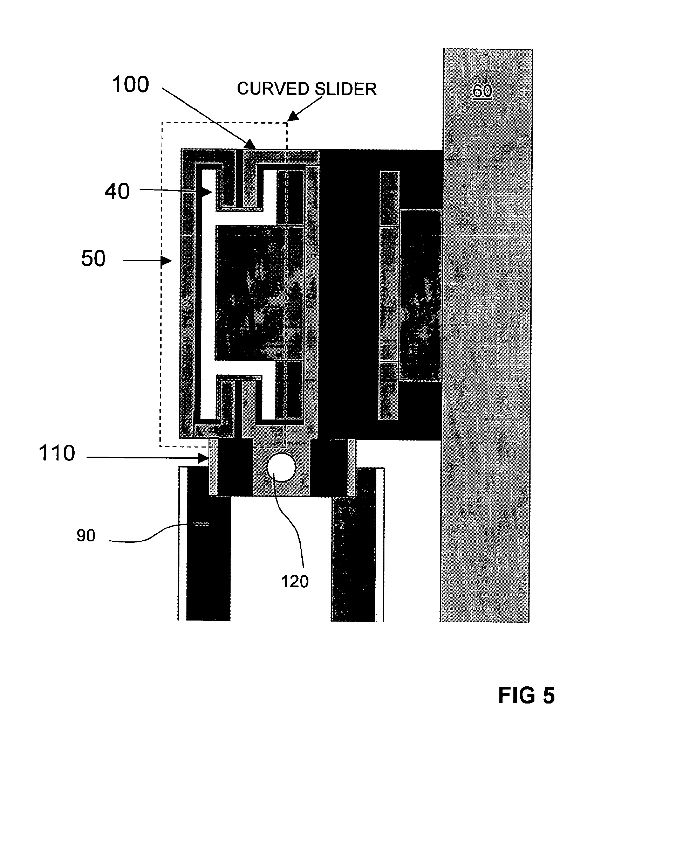

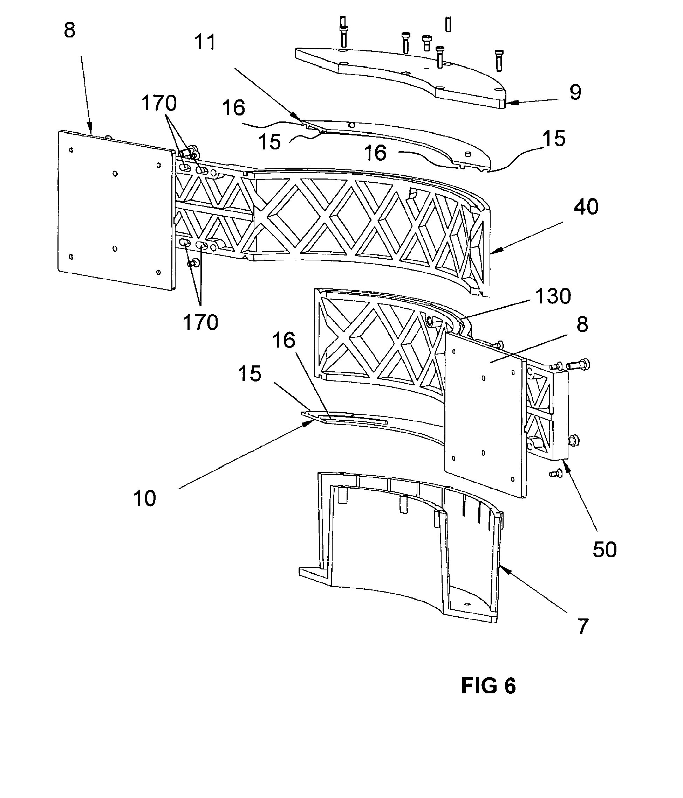

There are various configurations of slider which can achieve the overlap. For example, the arms 40, 50 could slide on different sides, front and back side or top and bottom of the central part 100 (not illustrated in the drawings). Alternatively, the central part 100 can be a curved hollow box configuration, see Fig 6, with both arms 40, 50 sliding inside. Or, as shown in Fig 5, the central part 100 can have a "C" shaped profile, a first arm, e.g. right arm 40, can slide on the central part 100, and the other arm, in the example given left arm 50, can slide on the first arm 40.

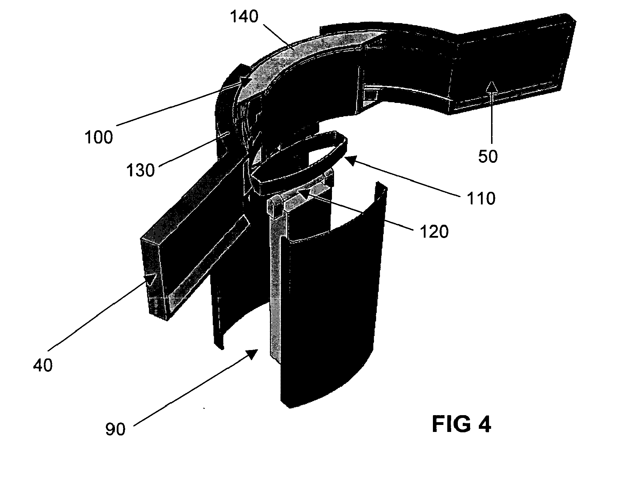

Fig 4 shows an exploded view of a support 10 according to an embodiment of the present invention, looked at from the front side, without the display devices 60 being present, and with both arms 40, 50 rotated somewhat. This shows that each arm 40, 50 has a straight part for fixing to the back of the display device 60, and a curved part having the slider profiles.

Below the central part 100 is shown a hinge 120 for enabling the central part 100 to be tilted, to tilt the pair of displays together. The hinge 120 may be a spring-and-hinge system for clamping the pair of displays with respect to the support 10. The hinge 120 is supported by a leg 90, and surrounded by a skirt 110 and other covers, for aesthetic purposes. The curved parts 130 of the right and left arms 40, 50 have covers on the outside which meet half way round the arc in this case, for aesthetic purposes, which disguise the fact that the sliders overlap and extend all the way round the arc.

Fig 5 shows a cross-section of the embodiment with the arms 40, 50 sliding on each other, the cross-section taken half way round the arc, with the display device 60 in position. The curved slider in this embodiment is made up of the three interleaved profiles of the central part 100, the right arm 40 and the left arm 50. The left arm 50 in this case has a "C" shaped profile which faces the "C" profile of the central part 100, but does not directly engage with it. Instead, both of these "C" profiles are carried by or slide on, the slider of the right arm 40. This enables undesired relative movement or play between the display devices 60, caused by slider gap tolerance in vertical or horizontal directions, to be reduced more easily, since there is only one gap and so only one tolerance to handle.

The slider of the right arm 40 has a profile which includes a "U" shape at the top, and an "n" shape at the bottom, connected by a rib. This is essentially equivalent to an "H" profile. One of the "C" profiles of the left arm 50 or of the central part 100 can slide on and be guided by the upper left and lower left verticals of the "H", while the other "C" profile can slide on and be guided by the upper right and lower right verticals of the "H". Which of the surfaces are the bearing surfaces and which are merely guiding surfaces, can be chosen as desired by altering the length of the verticals of the "C" or "H" profiles.

Any necessary cabling for the display devices 60 can be routed though the leg 90, past the hinge 120, and along the arms 40, 50 to the display devices 60. There would need to be sufficient slack in the cables so that movement of the display devices 60 is not restricted. A clamp (not represented in the drawings) can be provided to fix the display devices 60 after rotation, in order to prevent unintentional movement of the display devices 60 with respect to each other by unintentionally bumping against one of them. Or more conveniently, to save a user from needing to access a clamp, a mechanism can be provided to enable the display devices 60 to click into a number of different rotational angles. This can be achieved in various ways. For example a sprung ball in a recess in the bearing surfaces of the slider rolls along until it meets a recess in the opposing bearing surface. Then it clicks into position and needs additional force to move it to a next recess. Other click systems may also be used.

Fig 6 shows an exploded perspective view of an embodiment in which the central part 100 is in the form of a curved box and the sliders 130 of the arms 40, 50 fit inside the box. This means both arms 40, 50 slide on the central part 100. Hence there are two tolerances, to cause more relative movement or play between the display devices 60, but this arrangement can be simpler to manufacture.

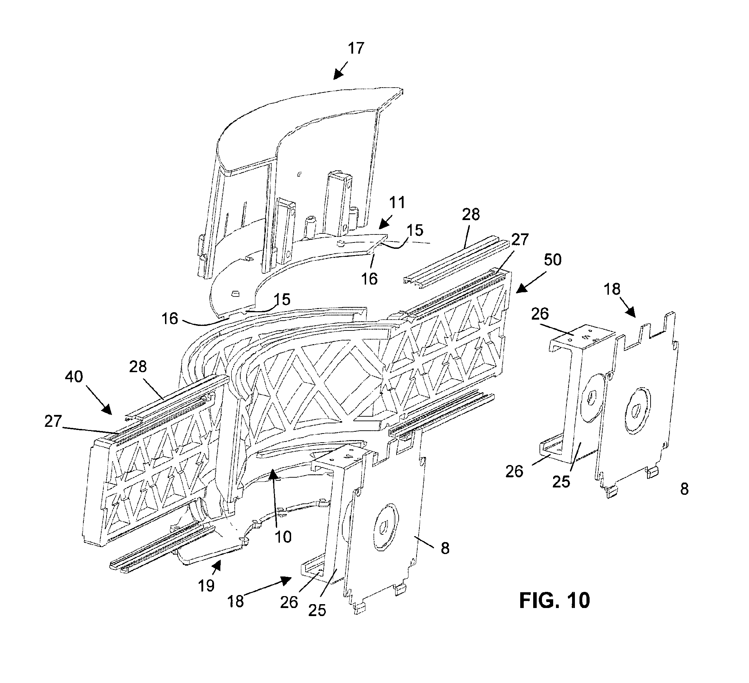

The box is made up of the following parts: base and sides 7, top part 9, bottom bearing surface 10, and top bearing surface11. Alternatively, as illustrated for another embodiment in Fig. 10, the curved box may be made up of top and sides 17, bottom part 19, bottom bearing surface 10 and top bearing surface 11. The right arm 40 and the left arm 50 may have a lattice structure for better strength to weight ratio. The curved part 130 of the right arm 40 and left arm 50 has grooves in its top surface and its bottom surface. These grooves engage with corresponding curved ridges in the bearing surfaces 10, 11 of the central part 100. The loading on the arms 40, 50 means that an outer end of the arms 40, 50 near the display device 60 is pushed down, and an inner end of the arms 40, 50 away from the display device 60 is pushed up. Hence the bearing surfaces of the arms 40, 50 and central part 100 will be under pressure at the outer bottom, and the inner top surfaces. At these points, a wedge shaped ridge 15 is provided on the bottom bearing surface 10 and on the top bearing surface 11, and correspondingly shaped grooves are provided on the curved parts of the arms 40, 50 so that the pressure causes the ridge 15 and corresponding groove to locate and guide the sliding surfaces without play.

At the inner bottom and outer top surfaces, where there is no pressure, it is better to provide a rectangular rail 16 on the bottom bearing surface 10 and on the top bearing surface 11 and correspondingly shaped grooves on the curved parts of the arms 40, 50, so that any vertical play does not create more horizontal play. As shown on bottom bearing surface 10, the wedge shaped ridge 15 is on an outside track and the rail 16 is on an inside track. They need not extend all the way round the arc. At the other end of the arc, another wedge shaped ridge 15 and rail 16 are provided, but the wedge shaped ridge 15 is on the inside track and the rail 16 on the outside.

A fixing plate 8, such as e.g. a VESA mount, for attachment onto a display device 60 is shown, fixable to the end of each arm 40, 50. The VESA Standard defines mounting interfaces, hole patterns and associated cable/power supply locations for LCD monitors, plasma displays and other flat panel devices. The fixing plate 8 may be a standard fitting to suit a range of display devices 60 with various dimensions, e.g. flat panel displays such as monitors, and preferably enables some adjustment of the position of the display device 60 onto the fixing plate 8. Fixing plates 8 are attached by any suitable attachment means onto the arms 40, 50. In one embodiment, the arms 40, 50 may be provided with fixation holes for attaching the fixing plate onto the arms 40, 50 by screwing. The fixation holes in the ends of the arms 40 and 50 (Fig 6) can be one or more slits rather than holes, thus permitting a stepless mounting of the display devices 60 with respect to the arms 40, 50. As shown in Fig. 7, the display device 60 on the right hand side of the drawing is directly fixed onto the arm 40, while the display device 60 on the left hand side of the drawing is fixed by means of a slider 150, e.g. in the middle of the display device 60, for example combined with internal rails (not visible on the drawings) parallel to the slider 150 making an exact fit between the arm 50 and a fixation block 160 on the back side of the display device 60 to provide an exact horizontal position of the display device 60. In Fig. 6, this is combined in such a way that several slits 170 are used as fixation points along the arm 40. An alternative embodiment, illustrated in Fig 10, has a more flexible mounting of various displays 60. In this case, the fixation plates 8 are provided with or connected onto first sliding means 18 for being slid over corresponding sliding guides 27 on the arms 40, 50, from the free extremity towards the support 10 or vice versa. In this case, the fixation plates 8 can take any intermediate position between the free extremity and the support 10. The first sliding means 18 may be substantially C-shaped in cross-section, with a back 25 and to legs 26 which are substantially perpendicular to the back 25. The legs 26 may slide directly over the corresponding sliding guides 27 on the arms 40, 50. In this case, the sliding guides 27 may be a kind of rails made in the arms 40, 50, made from the same material the arms 40, 50 are made from. Alternatively, the legs 26 may slide indirectly over the corresponding sliding guides 27 on the arms 40, 50, in which case the arms 40, 50 may be provided with supplementary sliding means 28 which allow an improved sliding of the legs 26 of the first sliding means 18 over the sliding guides 27. The supplementary sliding means 28 may be supplementary rails from a material with good sliding characteristics, e.g. plastics material such as Teflon, which are applied onto the top and/or bottom sides of the arms 40, 50, or the supplementary sliding means may consist of a coating with improved sliding characteristics which is applied to the top and/or bottom sides of the arms 40, 50.

Clearly other alternatives and mechanical equivalents can be conceived. The wedge shaped ridges 15 can be provided on the arms 40, 50 rather than the central part 100 for example. The arms 40, 50 can have other cross sections, such as tubes. The central part 100 can be dispensed with and one arm 40 or 50 fixed to the leg. In this case the leg can have a hinge with a vertical axis to enable the leg to swivel. As before the central part 100 can be mounted on a hinge to allow tilt adjustment. The display devices 60 can be electronic video displays or a combination of different devices including for example a whiteboard or a backlight cabinet for viewing X-ray film.

The virtual hinge line 30 can also be achieved by four bar or other pivoted mechanisms, though these are likely to be more complex and difficult to manufacture.

Another alternative is a hinge above and/ or below the displays. Instead of standing on a table, support 10 could be fixed to a wall or ceiling. In that case, all functions of the devices illustrated rotate 90 degrees respectively 180 degrees. Embodiments of the present invention include table, wall or ceiling mounting as well as a vertical or horizontal virtual hinge line.

Other variations can be conceived by those skilled in the art within the scope of the claims. For example, instead of two display devices 60 connected to each other by a virtual hinge support means as described above, three or more display devices can be connected to each other in a similar way, as illustrated in Fig 9.

## Claims

1. A support for supporting multiple display devices (60), the support being arranged to enable viewing angles of an adjacent pair of the display devices (60) to be altered relative to each other, by enabling a rotation of one or both of the pair about a hinge construction having a virtual hinge line (30) located along an axis between adjacent edges of the pair.

2. The support of claim 1, the hinge construction comprising hinge elements (40, 50) arranged behind the display devices (60).

3. The support of any preceding claim, the virtual hinge line (30) of the hinge construction being located at a front edge of the display devices (60), to enable rotation out of a common plane towards a viewer.

4. The support of any preceding claim, the hinge construction having a longitudinal axis and a curved slider (130, 140) coupled to at least one of the display devices (60) and curved about the axis (30) of the hinge construction.

5. The support of claim 4, the curved slider (130, 140) having first and second arms (40, 50) arranged to slide on bearing surfaces of the arms.

6. The support of any of claims 4 or 5, the curved slider (130, 140) having a central part (100) and first and second arms (40, 50) arranged to slide on bearing surfaces (10, 11) of the central part (100).

7. The support of claim 6, the central part (100) having a box cross-section.

8. The support of any of claims 4 to 7, the curved slider (130, 140) extending substantially the full length of an arc from the back of one of the display devices (60) to the back of the other.

9. The support of any of claims 4 to 8, the slider having co-operating guide surfaces for guiding the sliding.

10. The support of claim 9, the guide surfaces comprising co-operating wedge profile surfaces (15) on the bearing surfaces (10, 11).

11. The support of any preceding claim, furthermore having an actual hinge on the axis away from the display devices (60).

12. The support of any preceding claim, having a hinge perpendicular to the axis, to enable adjustment of viewing angle of the pair.

13. The support of any preceding claim, having a mounting for one or more further display devices.

14. The support of any preceding claim, furthermore comprising a fixing plate (8) for fixing a display device onto the support.

15. The support of claim 14, wherein the fixing plate (8) is provided with sliding means (18) for sliding over arms of the support.
